# EUROPEAN PATENT APPLICATION

(11) **EP 4 462 078 A1**
(43) Date of publication of application: **13.11.2024**
(21) Application number: 24172617.3
(22) Date of filing: 26.04.2024
(51) Int. Cl.: G01C 21/34, G06Q 10/047, G08G 1/00

(54) **SYSTEMS AND METHODS FOR PLANNING A ROUTE USING COSTS BASED ON OPERATOR SAFETY SCORES AND IDENTIFIED HAZARDOUS ZONES**

(30) Priority: 03.05.2023 US 202363463682 P
(71) Applicant: GEOTAB Inc., Oakville, ON L6H 7V2 (CA)
(72) Inventor: Karp, Bryan, Cedar Park (US); Berresford, Jason, Vulcan (CA)
(74) Representative: Fleuchaus & Gallo Partnerschaft mbB

(57) **Abstract**

Disclosed are systems for route planning (110) that include: at least one data storage operable to store operator data, traffic data, and data relating to one or more service requests; at least one processor in communication with the at least one data storage, the at least one processor operable to: identify (420), using the operator data, a plurality of operators available to respond to each of the one or more service requests, each of the operators having a safety score associated therewith; determine (430) whether any hazardous zones are present between a location of each of the operators and a location of each of the one or more the service requests based on the traffic data; determine (440), for each of the operators, a response cost based at least in part on: an operational cost corresponding to a predicted cost associated with a selected operator travelling to the location of each of the one or more service requests; and a safety cost corresponding to a predicted cost associated with the selected operator traversing one or more identified hazardous zones, and based at least in part on the safety score of the selected operator and one or more parameters of each of the one or more identified hazardous zones; and generate (450) a route to the location of each of the one or more service requests based on the response cost associated with each of the operators. Also disclosed are methods for route planning as well as non-transitory computer readable medium having instructions stored thereon executable by at least one processor to implement the methods.

## Description

### TECHNICAL FIELD

The present disclosure generally relates to route optimization. More specifically, the present disclosure relates to route planning and optimization using operator safety scores and identified hazardous driving zones as factors thereof.

### BACKGROUND

Route optimization is an important consideration for many industries, such as those that involve managing vehicle fleets. Route optimization may take into account factors such as distance and/or time between vehicle stops, the number of stops to be made, customer expectations (e.g., previously agreed upon timelines for services), costs associated with travel (e.g., costs associated with fuel consumption), costs associated with vehicle maintenance, sustainability objectives, and the like.

However, conventional techniques for route optimization may not consider factors related to driver safety. Traffic accidents, collisions, or crashes involving vehicles may have serious consequences. For example, crashes may result in serious injuries or, in some cases, fatal injuries to road users including vehicle operators, vehicle passengers, cyclists, and pedestrians. As well, collisions may have significant costs associated therewith, such as those associated with vehicle damage, property damage (e.g., damage to cargo carried on the vehicle), insurance ramifications, incurred legal fees, medical treatments, operational delays, internal procedures (e.g., updating of internal SOPs), etc. Thus, it is desirable to avoid traffic accidents, collisions, and crashers wherever possible.

A need therefore exists for improved systems and methods for route planning and optimization that consider driver safety as a factor thereof.

### SUMMARY

In one aspect, the present disclosure relates to a system for route planning, the system comprising: at least one data storage operable to store operator data, traffic data, and data relating to one or more service requests; at least one processor in communication with the at least one data storage, the at least one processor operable to: identify, using the operator data, a plurality of operators available to respond to each of the one or more service requests, each of the operators having a safety score associated therewith; determine whether any hazardous zones are present between a location of each of the operators and a location of each of the one or more the service requests based on the traffic data; determine, for each of the operators, a response cost based at least in part on: an operational cost corresponding to a predicted cost associated with a selected operator travelling to the location of each of the one or more service requests; and a safety cost corresponding to a predicted cost associated with the selected operator traversing one or more identified hazardous zones, and based at least in part on the safety score of the selected operator and one or more parameters of each of the one or more identified hazardous zones; and generate a route to the location of each of the one or more service requests based on the response cost associated with each of the operators.

According to an embodiment, the safety score associated with each of the operators is based on a normalized rate of occurrence of a safety exception event performed by an operator vehicle. In a further embodiment, the safety exception event comprises a harsh event, a speeding event, a seatbelt event, or a combination thereof. In a yet further embodiment, the harsh event comprises a safety exception event type that is a harsh acceleration event, a harsh braking event, a harsh cornering event, or a combination thereof. In a yet further embodiment, the speeding event comprises a safety exception event type that is a light speeding event, a medium speeding event, a heavy speeding event, or a combination thereof.

According to an embodiment, the safety score associated with each of the operators comprises a plurality of safety subscores, each of the safety subscores based on a normalized rate of occurrence of a different safety exception event. In a further embodiment, one or more of the plurality of safety subscores comprise a plurality of safety subtype scores, each safety subtype score based on a normalized rate of occurrence of a different safety exception event type.

According to an embodiment, the at least one processor is operable to determine of whether any hazardous zones are present by identifying, using the traffic data, any road segments between the location of each of the operators and the location of each of the one or more service requests upon which one or more vehicle collision events have occurred. In a further embodiment, the at least one processor is operable to identify any road segments between the location of each of the operators and the location of each of the one or more service requests upon which a predetermined threshold of vehicle collision events have occurred.

In a yet further embodiment, the at least one processor is further operable to: determine a severity score associated with each of the one or more vehicle collision events; and assign each identified road segment a hazard score based on the number vehicle collision events having occurred thereon and the severity score associated with each thereof. In a yet further embodiment, the severity score is based at least in part on a measured g-force of each of the one or more vehicle collision events, a vehicle type involved in each of the one or more vehicle collision events, a time of occurrence of each of the one or more vehicle collision events, weather conditions during each of the one or more vehicle collision events, or a combination thereof. In a yet further embodiment, the hazard score is based on a trend of a number of vehicle collision events over a period of time and the severity score associated with each thereof.

In a yet further embodiment, each of the one or more vehicle collision events has a collision type associated therewith and the processor is further configured to classify identified hazardous zones based on the collision type associated with each of the one or more vehicle collision events. In a yet further embodiment, each collision type is a weather-related collision, a vehicle-vehicle collision, an infrastructure-related collision, a heavy-vehicle collision, or a combination thereof. In a yet further embodiment, the identified hazardous zones are classified by aggregating a plurality of collision types.

According to an embodiment, the operational cost comprises predicted costs associated with vehicle operation, vehicle maintenance, operator hourly rates, operator overtime rates, or a combination thereof.

According to an embodiment, each of the operators has associated therewith a safety score trend based on changes in the safety score associated therewith over a period of time. In a further embodiment, the safety score trend is determined using an exponential moving average.

According to an embodiment, the safety cost is based at least in part on the safety score of the selected operator, a safety score trend associated with the selected operator, or a combination thereof, and a classification of each of the one or more identified hazardous zones, a hazard score of each of the one or more hazardous zones, or a combination thereof.

According to an embodiment, the at least one processor is operable to generate the route to the location of each of the one or more service requests based on the response cost associated with each of the operators by: generating an initial route between a location of an operator having a selected operational cost associated therewith and the location of each of the one or more service requests; and optimizing the initial route based on the safety cost associated with the operator. In a further embodiment, the selected operational cost is an operational cost that is less than a predetermined threshold, an operational cost that is lower than the operational cost associated each other operator, or a combination thereof. In a yet further embodiment, the at least one processor is operable to optimize the initial route by adjusting the initial route to avoid one or more identified hazardous zones. In a yet further embodiment, the at least one processor is operable to optimize the initial route by: ranking any identified hazardous zones based on a hazard score associated with each thereof; and adjusting the initial route based on the hazard score associated with each identified hazardous zone.

According to an embodiment, the at least one processor is operable to generate the route to the location of each of the one or more service requests based on the response cost associated with each of the operators by: identifying an operator having a selected response cost associated therewith; and generating a route between the operator having a selected response cost associated therewith and the location of each of the one or more service requests. In a further embodiment, the selected response cost is a response cost that is less than a predetermined threshold, a response cost that is lower than the response cost associated with each other operator, or a combination thereof.

In another aspect, the present disclosure relates to a method for route planning, the method comprising operating at least one processor to: receive operator data, traffic data, and data relating to one or more service requests; identify, using the operator data, a plurality of operators available to respond to each of the one or more service requests, each of the operators having a safety score associated therewith; determine whether any hazardous zones are present between a location of each of the operators and a location of each of the one or more the service requests based on the traffic data; determine, for each of the operators, a response cost based at least in part on: an operational cost corresponding to a predicted cost associated with a selected operator travelling to the location of each of the one or more service requests; and a safety cost corresponding to a predicted cost associated with the selected operator traversing one or more identified hazardous zones, and based at least in part on the safety score of the selected operator and one or more parameters of each of the one or more identified hazardous zones; and generate a route to the location of each of the one or more service requests based on the response cost associated with each of the operators.

According to an embodiment, the safety score associated with each of the operators is based on a normalized rate of occurrence of a safety exception event performed by an operator vehicle. In a further embodiment, the safety exception event comprises a harsh event, a speeding event, a seatbelt event, or a combination thereof. In a yet further embodiment, the harsh event comprises a safety exception event type that is a harsh acceleration event, a harsh braking event, a harsh cornering event, or a combination thereof. In a yet further embodiment, the speeding event comprises a safety exception event type that is a light speeding event, a medium speeding event, a heavy speeding event, or a combination thereof.

In a yet further embodiment, the safety score associated with each of the operators comprises a plurality of safety subscores, each of the safety subscores based on a normalized rate of occurrence of a different safety exception event. In a yet further embodiment, one or more of the plurality of safety subscores comprise a plurality of safety subtype scores, each safety subtype score based on a normalized rate of occurrence of a different safety exception event type.

In a yet further embodiment, the determining of whether any hazardous zones are present comprises operating the at least one processor to identify, using the traffic data, any road segments between the location of each of the operators and the location of each of the one or more service requests upon which one or more vehicle collision events have occurred. In a yet further embodiment, the identifying of any road segments between the location of each of the operators and the location of each of the one or more service requests comprises operating the at least one processor to identify any road segments between the location of each of the operators and the location of each of the one or more service requests upon which a predetermined threshold of vehicle collision events have occurred.

In a yet further embodiment, the method further comprises operating the at least one processor to: determine a severity score associated with each of the one or more vehicle collision events; and assign each identified road segment a hazard score based on the number vehicle collision events having occurred thereon and the severity score associated with each thereof. In a yet further embodiment, the severity score is based at least in part on a measured g-force of each of the one or more vehicle collision events, a vehicle type involved in each of the one or more vehicle collision events, a time of occurrence of each of the one or more vehicle collision events, weather conditions during each of the one or more vehicle collision events, or a combination thereof. In a yet further embodiment, the hazard score is based on a trend of a number of vehicle collision events over a period of time and the severity score associated with each thereof. In a yet further embodiment, the trend in the number of vehicle collisions over time is determined using an exponential moving average.

In a yet further embodiment, each of the one or more vehicle collision events has a collision type associated therewith and the processor is further configured to classify identified hazardous zones based on the collision type associated with each of the one or more vehicle collision events. In a yet further embodiment, each collision type is a weather-related collision, a vehicle-vehicle collision, an infrastructure-related collision, a heavy-vehicle collision, or a combination thereof. In a yet further embodiment, the identified hazardous zones are classified by aggregating a plurality of collision types.

According to an embodiment, the operational cost comprises predicted costs associated with vehicle operation, vehicle maintenance, operator hourly rates, operator overtime rates, or a combination thereof.

According to an embodiment, each of the operators has associated therewith a safety score trend based on changes in the safety score associated therewith over a period of time. In a further embodiment, the safety score trend is determined using an exponential moving average.

According to an embodiment, the safety cost is based at least in part on the safety score of the selected operator, a safety score trend associated with the selected operator, or a combination thereof, and a classification of each of the one or more identified hazardous zones, a hazard score of each of the one or more hazardous zones, or a combination thereof.

According to an embodiment, the generating of the route to the location of each of the one or more service requests based on the response cost associated with each of the operators comprises operating the at least one processor to: generate an initial route between a location of an operator having a selected operational cost associated therewith and the location of each of the one or more service requests; and optimize the initial route based on the safety cost associated with the operator. In a further embodiment, the selected operational cost is an operational cost that is less than a predetermined threshold, an operational cost that is lower than the operational cost associated each other operator, or a combination thereof. In a yet further embodiment, the optimizing of the initial route comprises operating the at least one processor to adjust the initial route to avoid one or more identified hazardous zones. In a yet further embodiment, the optimizing of the initial route comprises operating the at least one processor to: rank any identified hazardous zones based on a hazard score associated with each thereof; and adjust the initial route based on the hazard score associated with each identified hazardous zone.

According to an embodiment, the generating of the route to the location of each of the one or more service requests based on the response cost associated with each of the operators comprises operating the at least one processor to: identify an operator having a selected response cost associated therewith; and generate a route between the operator having a selected response cost associated therewith and the location of each of the one or more service requests. In a further embodiment, the selected response cost is a response cost that is less than a predetermined threshold, a response cost that is lower than the response cost associated with each other operator, or a combination thereof.

In another aspect, the present disclosure relates to non-transitory computer readable medium having instructions stored thereon executable by at least one processor to implement a method for route planning, the method comprising operating the at least one processor to: receive operator data, traffic data, and data relating to one or more service requests; identify, using the operator data, a plurality of operators available to respond to each of the one or more service requests, each of the operators having a safety score associated therewith; determine whether any hazardous zones are present between a location of each of the operators and a location of each of the one or more the service requests based on the traffic data; determine, for each of the operators, a response cost based at least in part on: an operational cost corresponding to a predicted cost associated with a selected operator travelling to the location of each of the one or more service requests; and a safety cost corresponding to a predicted cost associated with the selected operator traversing one or more identified hazardous zones, and based at least in part on the safety score of the selected operator and one or more parameters of each of the one or more identified hazardous zones; and generate a route to the location of each of the one or more service requests based on the response cost associated with each of the operators.

Other aspects and features of the systems and methods of the present disclosure will become apparent to those ordinarily skilled in the art upon review of the following description of specific embodiments.

### BRIEF DESCRIPTION OF THE DRAWINGS

These and other features of the present disclosure will become more apparent in the following detailed description in which reference is made to the appended drawings. The appended drawings illustrate one or more embodiments of the present disclosure by way of example only and are not to be construed as limiting the scope of the present disclosure.
FIG. 1 shows a block diagram of various components interacting with an example fleet management system according to an embodiment of the present disclosure.
FIG. 2 shows a block diagram of an example fleet management system interacting with an example telematics device and an example vehicle, according to an embodiment of the present disclosure.
FIG. 3 shows a block diagram of an example computing device interacting with an example fleet management system, according to an embodiment of the present disclosure.
FIG. 4 shows a flowchart of an example method for route planning, according to an embodiment of the present disclosure.

### DETAILED DESCRIPTION

Safety factors (e.g., driver safety and/or hazardous driving zones) generally may not be considered during the implementation of conventional systems and methods for route optimization. As will be appreciated, disregard of safety factors may lead to an increased occurrence of traffic accidents, collisions, or crashes, with which are associated a number of consequences such as injuries to people present on and around the road way (e.g., drivers, passengers, pedestrians, cyclists, etc.) as well as a variety of incurred costs to the vehicle owner or operator (e.g., costs associated with vehicle damage, property damage, insurance, legal fees, medical treatments, operational delays, etc.).

Thus, it is an object of the present disclosure to provide advantageous systems and methods for route planning and optimization that are capable of reducing the risk of traffic accidents, collisions, and crashes and, in turn, the impacts of the consequences associated therewith by taking into account safety factors.

Additional advantages will be discussed below and will be readily apparent to those of ordinary skill in the art upon reading the present disclosure.

Reference will now be made in detail to example embodiments of the disclosure, wherein numerals refer to like components, examples of which are illustrated in the accompanying drawings that further show example embodiments, without limitation.

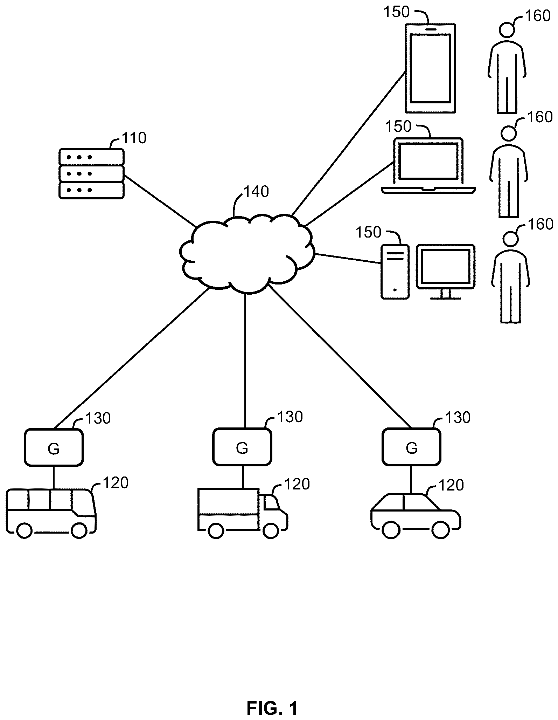

Referring now to FIG. 1, there is shown an example of a fleet management system 110 for managing a plurality of assets equipped with a plurality of telematics devices 130. Each of the telematics devices 130 is capable of collecting various data from the vehicles 120 (i.e., telematics data) and sharing the telematics data with the fleet management system 110. The fleet management system 110 may be remotely located from the telematics devices 130 and the vehicles 120.

The vehicles 120 may include any type of vehicle. For example, the vehicles 120 may include motor vehicles such as cars, trucks (e.g., pickup trucks, heavy-duty trucks such as class-8 vehicles, etc.), motorcycles, industrial vehicles (e.g., buses), and the like. Each motor vehicle may be a gas, diesel, electric, hybrid, and/or alternative fuel vehicle. Further, the vehicles 120 may include vehicles such as railed vehicles (e.g., trains, trams, and streetcars), watercraft (e.g., ships and recreational pleasure craft), aircraft (e.g., airplanes and helicopters), spacecraft, and the like. Each of the vehicles 120 may be equipped with one of the telematics devices 130. However, as will be appreciated, the systems and methods of the present disclosure may be particularly useful for commercial or industrial vehicles for which routes may be planned and/or optimized.

Further, it is noted that, while only three vehicles 120 having three telematics devices 130 are shown in the illustrated example, it will be appreciated that there may be any number of vehicles 120 and telematics devices 130. For example, the fleet management system 110 may manage hundreds, thousands, or even millions of vehicles 120 and telematics devices 130.

In some embodiments, the telematics devices 130 may be standalone devices that are removably installed in the vehicles 120 (e.g., aftermarket telematics devices). In other embodiments, the telematics devices 130 may be integrated components of the vehicles 120 (e.g., pre-installed by an OEM). As described herein, the telematics devices 130 may collect various telematics data and share the telematics data with the fleet management system 110. The telematics data may include any information, parameters, attributes, characteristics, and/or features associated with the vehicles 120. For example, the vehicle data may include, but is not limited to, location data, speed data, acceleration data, fluid level data (e.g., oil, coolant, and washer fluid), energy data (e.g., battery and/or fuel level), engine data, brake data, transmission data, odometer data, vehicle identifying data, error/diagnostic data, tire pressure data, seatbelt data, airbag data, or a combination thereof. In some embodiments, the telematics data may include information relating to the telematics devices 130 and/or other devices associated with or connected to the telematics devices 130. Regardless, it should be appreciated the telematics data is a form of electronic data that requires a computer (e.g., a processor such as those described herein) to transmit, receive, interpret, process, and/or store.

Once received, the fleet management system 110 may process the telematics data obtained from the telematics devices 130 to provide various analysis, predictions, reporting, etc. In some embodiments, the fleet management system 110 may process the telematics data to provide additional information about the vehicles 120, such as, but not limited to, trip distances and times, idling times, harsh braking and driving, usage rates, fuel economy, and the like. Various data analytics may be implemented to process the telematics data. The telematics data may then be used to manage various aspects of the vehicles 120, such as route planning, vehicle maintenance, driver compliance, asset utilization, fuel management, etc., which, in turn, may improve productivity, efficiency, safety, and/or sustainability of the vehicles 120.

A plurality of computing devices 150 may provide access to the fleet management system 110 to a plurality of users 160. The users 160 may use computing devices 150 to access or retrieve various telematics data collected and/or processed by the fleet management system 110 to manage and track the vehicles 120. As will be appreciated, the computing devices 150 may be any suitable computing devices. For example, the computing devices 150 may be any type of computers such as, but not limited to, personal computers, portable computers, wearable computers, workstations, desktops, laptops, smartphones, tablets, smartwatches, personal digital assistants (PDAs), mobile devices, and the like. The computing devices 150 may be remotely located from the fleet management system 110, telematic devices 130, and vehicles 120.

The fleet management system 110, telematics devices 130, and computing devices 150 may communicate through a network 140. The network 140 may comprise a plurality of networks and may be wireless, wired, or a combination thereof. As will be appreciated, the network 140 may employ any suitable communication protocol and may use any suitable communication medium. For example, the network 140 may comprise Wi-Fi^{™} networks, Ethernet networks, Bluetooth^{™} networks, near-field communication (NFC) networks, radio networks, cellular networks, and/or satellite networks. The network 140 may be public, private, or a combination thereof. For example, the network 140 may comprise local area networks (LANs), wide area networks (WANs), the internet, or a combination thereof. Of course, as will also be appreciated, the network 140 may also facilitate communication with other devices and/or systems that are not shown.

Further, the fleet management system 110 may be implemented using one or more computers. For example, the fleet management system 110 may be implements using one or more computer servers. The servers may be distributed across a wide geographical area. In some embodiments, the fleet management system 110 may be implemented using a cloud computing platform, such as Google Cloud Platform^{™} and Amazon Web Services^{™}. In other embodiments, the fleet management system 110 may be implemented using one or more dedicated computer servers. In a further embodiment, the fleet management system 110 may be implemented using a combination of a cloud computing platform and one or more dedicated computer servers.

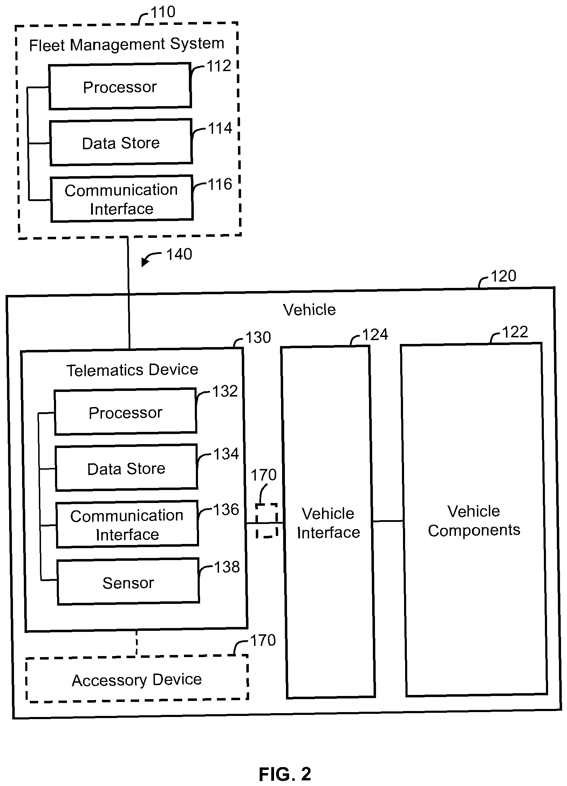

Referring now to FIG. 2, there is illustrated the fleet management system 110 in communication with one of the telematics devices 130 that is installed in one of the vehicles 120. As shown, the fleet management system 110 may include a processor 112, a data storage 114, and a communication interface 116, each of which may communicate with each other. The processor 112, the data storage 114, and the communication interface 116 may be combined into fewer components, divided into additional subcomponents, or a combination thereof. The components and/or subcomponents may not necessarily be distributed in proximity to one another and may instead be distributed across a wide geographical area.

The processor 112 may control the operation of the fleet management system 110. As will be appreciated, the processor 112 may be implemented using one or more suitable processing devices or systems. For example, the processor 112 may be implemented using central processing units (CPUs), graphics processing units (GPUs), field programmable gate arrays (FPGAs), application specific integrated circuits (ASICs), digital signal processors (DSPs), neural processing units (NPUs), quantum processing units (QPUs), microprocessors, controllers, and the like. The processor 112 may execute various instructions, programs, software, or a combination thereof stored on the data storage 114 to implement various methods described herein. For example, the processor 112 may process various telematics data collected by the fleet management system 110 from the telematics devices 130.

Various data for the fleet management system 110 may be stored on the data storage 114. The data storage 114 may be implemented using one or more suitable data storage devices or systems such as random-access memory (RAM), read only memory (ROM), flash memory, hard disk drives (HDDs), solid-state drives (SSDs), magnetic tape drives, optical disc drives, memory cards, and the like. The data storage 114 may include volatile memory, nonvolatile memory, or a combination thereof. Further, the data storage 114 may comprise non-transitory computer readable media. The data storage 114 may store various instructions, programs, and/or software that are executable by the processor 112 to implement various methods described herein. The data storage 114 may store various telematics data collected from the telematics devices 130 and/or processed by the processor 112.

The communication interface 116 may enable communication between the fleet management system 110 and other devices and/or systems, such as the telematics devices 130. The communication interface 116 may be implemented using any suitable communications devices and/or systems. For example, the communication interface 116 may comprise one or more various physical connectors, ports, or terminals such as universal serial bus (USB), ethernet, Thunderbolt, Firewire, serial advanced technology attachment (SATA), peripheral component interconnect (PCI), high-definition multimedia interface (HDMI), DisplayPort, and the like. As another example, the communication interface 116 may comprise one or more wireless interface components to connect to wireless networks such as Wi-Fi^{™}, Bluetooth^{™}, NFC, cellular, satellite, and the like. The communication interface 116 may enable various inputs and outputs to be received at and sent from the fleet management system 110. For example, the communication interface 116 may be used to telematics data from the telematics devices 130.

The telematics devices 130 also may include a processor 134, a data storage 134, and a communication interface 136. The telematics devices 130 may also comprise a sensor 138. Each of the components of the telematics devices 130 may communicate with each other and may be combined into fewer components or divided into additional subcomponents.

The processor 132 may control the operation of the telematics device 130. The processor 132 may be implemented using any suitable processing devices or systems, such as those described above in relation to the processor 112 of the fleet management system 110. The processor 132 may execute various instructions, programs, software, or a combination thereof stored on the data storage 134 to implement various methods described herein. For example, the processor 132 may process various telematics data obtained from vehicle components 122 and/or the sensor 138.

The data storage 134 may store various data for the telematics device 130. The data storage 134 may be any suitable data storage device or system, such as those described above in relation to the data storage 114 of the fleet management system 110. The data storage 134 may store various instructions, programs, software, or a combination thereof executable by the processor 132 to implement various methods described herein. As well, the data storage 134 may store various telematics data obtained from the vehicle components 122 and/or the sensor 138.

The communication interface 136 may enable communication between the telematics devices 130 and other devices or systems, such as the fleet management system 110 and the vehicle components 122. The communication interface 136 may comprise any suitable communication devices or systems, such as those described above in relation to the communication interface 116 of the fleet management system 110. The communication interface 136 may enable various inputs and outputs to be received at and sent from the telematics devices 130. For example, the communication interface 136 may be used to collect vehicle data from the vehicle components 122 and/or sensor 138, to send vehicle data to the fleet management system 110, etc.

The sensor 138 may detect and/or measure various environmental events, changes, etc. The sensor 138 may include any suitable sensing devices or systems, such as, but not limited to, location sensors, velocity sensors, acceleration sensors, orientation sensors, vibration sensors, proximity sensors, temperature sensors, humidity sensors, pressure sensors, optical sensors, audio sensors, and combinations thereof. When the telematics device 130 is installed in the vehicle 120, the sensor 138 may be used to collect telematics data that may not be obtainable from the vehicle components 122. For example, the sensor 138 may include a satellite navigation device such as a global positioning system (GPS) receiver that may measure the location of the vehicle 120. In some embodiments, the sensor 138 may comprise accelerometers, gyroscopes, magnetometers, inertial measurement units (IMUs), or the like that may measure the acceleration and/or orientation of the vehicle 120.

In some embodiments, the telematics devices 130 may operate in conjunction with one or more accessory devices 170 that are in communication therewith. The accessory devices 170 may include one or more expansion devices that may provide additional functionality to the telematics devices 130. For example, the accessory devices 170 may provide additional processing storage, communication, and/or sensing functionality through one or more additional processors, data storages, communication interfaces, and/or sensors (not pictured). The accessory devices 170 may also include adaptor devices that facilitate communication between the communication interface 136 and one or more vehicle interfaces 124, such as a cable harness. The one or more accessory devices 170 may be installed in the vehicle 120 along with the telematics devices 130.

As described herein, the telematics device 130 may be installed within the vehicle 120 removably or integrally. The vehicle 120 may include the vehicle components 122 and the one or more vehicle interfaces 124, which, as will be appreciated, may be combined into fewer components or divided into additional subcomponents. In some embodiments, the vehicle components 122 may comprise any subsystems, parts, subcomponents, or combinations thereof of the vehicle 120. For example, the vehicle components 122 may comprise powertrains, engines, transmissions, steering, braking, seating, batteries, doors, suspensions, etc. The telematics device 130 may obtain various telematics data from the vehicle components 122. For example, in some embodiments, the telematics device 130 may communicate with one or more electrical control units (ECUs) that control the vehicle components 122 or one or more internal sensors thereof.

The vehicle interface 124 may facilitate communication between the vehicle components 122 and other devices or systems. As well, the vehicle interface 124 may comprise any suitable communication devices or systems. For example, the vehicle interface 124 may include an on-board diagnostics (OBD-II) port and/or controller area network (CAN) bus port. The vehicle interface 124 may be used by the telematics device 130 to obtain telematics data from the vehicle components 122. For example, the communication interface 136 may be connected to the vehicle interface 124 to communicate with the vehicle components 122. In some embodiments, the one or more accessory devices 170 (e.g., a wire harness) may provide the connection between the communication interface 136 and the vehicle interface 124.

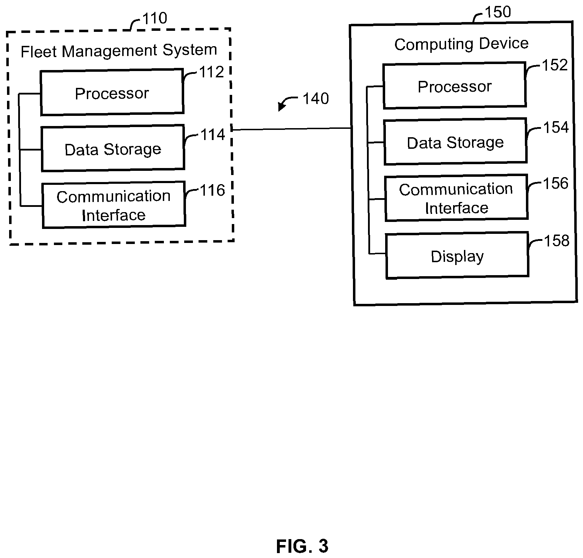

Referring now to FIG. 3, there is shown the fleet management system 110 in communication with the computing devices 150. As shown, the computing device 150 may also include a processor 152, a data storage 153, and a communication interface 156. As well, the computing device 150 may include a display 158. Each of the components of the computing device 150 may be communicate with each other and may be combined into fewer components or divided into additional subcomponents.

The processor 152 may control the operation of the computing device 150. The processor 152 may be implemented using any suitable processing devices or systems, such as those described above in relation to the processor 112 of the fleet management system 110. The processor 152 may execute various instructions, programs, software, or a combination thereof stored on the data storage 154 to implement various methods described herein. For example, the processor 152 may process various telematics data received from the fleet management system 110, the telematics devices 130, or a combination thereof.

The data storage 154 may store various data for the computing device 150. The data storage 150 may be any suitable data storage device or system, such as those described above in relation to the data storage 114 of the fleet management system 110. The data storage 154 may store various instructions, programs, software, or a combination thereof executable by the processor 152 to implement various methods described herein. As well, the data storage 154 may store various telematics data received from the fleet management system 110, the telematics devices 130, or a combination thereof.

The communication interface 156 may enable communication between the computing device 150 and other devices or systems, such as the fleet management system 110. The communication interface 156 may be any suitable communication device or system, such as those described above in relation to the communication interface 116 of the fleet management system 110. The communication interface 156 may enable various inputs and outputs to be received at and sent from the computing device 150. For example, the communication interface 156 may be used to retrieve telematics data the fleet management system 110.

The displays 158 may visually present various data for the computing device 150. The displays 158 may be implemented using any suitable display devices or systems, such as, but not limited to, light-emitting diode (LED) displays, liquid crystal displays (LCD), electroluminescent displays (ELDs), plasma displays, quantum dot displays, cathode ray tube (CRT) displays, and the like. The display 158 may be an integrated component that is integral with the computing device 150 or a standalone device that is removably connected to the computing device 150. The display 158 may display various visual representations of the telematics data.

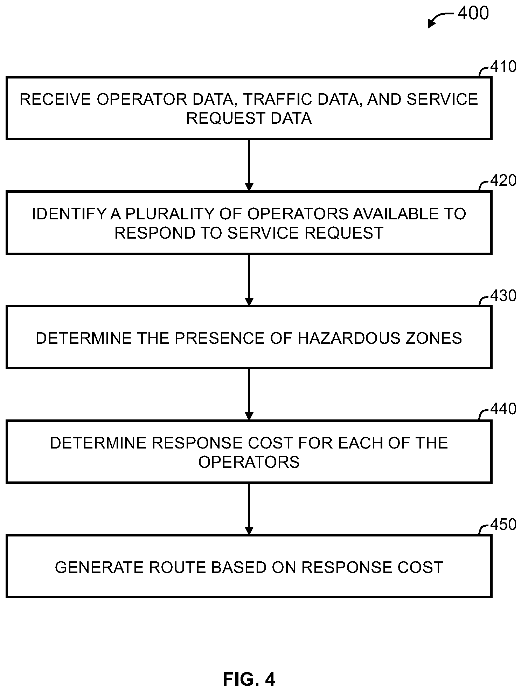

Referring now to FIG. 4, there is shown an example of a method for route planning according to an embodiment of the present disclosure. As shown, a method for route planning (400) may comprise operating at least one processor to: receive operator data, traffic data, and data relating to one or more service requests (410); identify, using the operator data, a plurality of operators available to respond to each of the one or more service requests, each of the operators having a safety score associated therewith (420); determine whether any hazardous zones are present between a location of each of the operators and a location of each of the one or more service requests based on the traffic data (430); determine, for each of the operators, a response cost based at least in part on: an operational cost corresponding to a predicted cost associated with a selected operator travelling to the location of each of the one or more service requests, and a safety cost corresponding to a predicted cost associated with the selected operator traversing one or more identified hazardous zones, and based at least in part on the safety score of the selected operator and one or more parameters of each of the one or more identified hazardous zones (440); and generate a route to the location of each of the one or more service requests based on the response cost associated with each of the operators (450).

The method 400 may be implemented using any suitable combination of hardware and software, such as those illustrated in and/or described in relation to FIG. 1 to FIG. 3. For example, one or more operations (e.g., operations 410, 420, 430, 440, and/or 450) of the method 400 may be implemented at the fleet management system 110 (e.g., by the processor 112 executing instructions stored on the data storage 114), at the telematics device (e.g., by the processor 132 executing instructions stored on the data storage 134), at the computing devices 150 (e.g., by the processor 152 executing instructions stored on the data storage 154), or a combination thereof.

At 410 of FIG. 4, operator data, traffic data, and data relating to a service request may be received. The operator data may pertain to, for example, operators employed by a user of the systems and methods of the present disclosure. As described herein, the operator data may be used to identify operators available to respond to a service request, each of the operators having a safety score associated therewith. As also described herein, the systems and methods of the present disclosure may use a location of an operator when route planning. Thus, the operator data may include operator identifying information (e.g., operator names, employee IDs, and/or other identifying information), operator safety score information, operator activity information (e.g., whether an operator has signed in for work), and operator location information (e.g., a real-time location of an operator, a facility at which the operator is typically located or starts their shift).

The operator data my be obtained using any suitable devices and/or systems, such as those described above in relation to FIG. 1 to FIG. 3. For example, the operator data may at least in part be received from the telematics devices 130 (e.g., the processor 132). In more detail, an operator may indicate via the telematics device 130 or an accessory device 170 that they are in a vehicle. The telematics device 130 may then indicate to the fleet management system 110 (e.g., processor 112) that a particular operator is active in a particular vehicle at a particular location, thereby providing operator identifying information, operator activity information, and operator location information to the fleet management system 110. Of course, other combinations of devices and/or systems are possible and are contemplated.

As described herein, the traffic data may be used in the determining of whether any hazardous zones are present between a location of each of the identified operators and a location of each of the one or more service requests. Thus, the traffic data may include map data that identifies one or more road networks within one or more geographical areas. As will be appreciated, each road network may comprise one or more road segments, each of which may represent at least a portion of any type of roadway along which a vehicle may travel such as, but not limited to, roads, streets, avenues, alleyways, highways, freeways, etc. The map data may be obtained from, for example, various map information providers such as OpenStreetMap (OSM).

In some embodiments, the traffic data may be used to generate or optimize a route between an operator and a service request location. In such embodiments, the traffic data may include additional information such as vehicle speed data collected from a plurality of vehicles operating within a road network over a period of time (e.g., obtained from the telematics devices 130), road segment speed limit data (e.g., obtained from various map information providers), and/or other information that may be useful when planning or optimizing a route. For example, the vehicle speed data and/or road segment speed limit data may be used to determine the fastest or most efficient route for an operator to take to get to the location of a service request (e.g., a route that avoids traffic and/or road segments having relatively low speed limits).

The data relating to one or mores service requests may indicate a type of service request, a location of each of the one or more service requests, and the like, and may be received by a user of the systems and methods of the present disclosure from a customer, a business partner, etc. The data relating to the one or more service requests may be obtained by, for example, a customer entering relevant information into a computer-based system of a user of the systems and methods of the present disclosure, by requesting a service via telephone, and/or any other type of system the user may employ to receive service requests from customers, other users, etc. It is also noted that each of the one or more service requests may be any type of service request and may include delivery requests, maintenance service requests, and the like.

The operator data, the traffic data, and the data relating to the one or more service requests may be received using any suitable devices and systems, such as those described above in relation to FIG. 1 to FIG. 3. For example, the various types of data may be received by one or more the telematics devices 130 (e.g., the processor 132), the fleet management system 110 (e.g., the processor 112), and the computing devices 150 (e.g., the processor 152), from one or more of the telematics devices 130 (e.g., the data storage 134), the fleet management system 110 (e.g. the data storage 112), and the computing devices 150 (e.g., the data storage 154). It is also noted that the various types of data may be received together, separately, or a combination thereof.

As shown at 420 of FIG. 4, a plurality of operators available to respond to each of the one or more service requests may be identified using the operator data. As described herein, the operator data may include operator identifying information, operator activity information, operator location information, and the like. The identifying of the operators available to respond to each of the one or more service requests may be based on, for example, one or more factors such as the location of the operator relative to the location of each of the one or more service requests, whether the operator is working on the day or at the time of each of the one or more service requests (e.g., depending on whether the operator has indicated that they have started their shift or on what operators are expected to be working that day or time), etc.

As described herein, each of the operators identified as available to respond to each of the one or more service requests may have associated therewith a safety score. The safety score may generally indicate the how safe an operator is when operating a vehicle (e.g., one of the vehicles 120). In more detail, in some embodiments, each safety score may be based on a normalized rate of occurrence of a safety exception event performed by an operator vehicle (i.e., a vehicle used by the operator). Safety exception events may represent unsafe or undesirable actions performed by the operator vehicle. For example, each safety exception event may represent an action or an activity performed by the operator vehicle that violates a predetermined safety rule, test, or criterion. Each safety exception event may comprise a plurality of safety exception event types. That is, there may be various types of safety exception events. For example, each safety exception event may comprise a harsh event, a speeding event, a seatbelt event, or a combination thereof.

A harsh event may generally refer to occasions where the operator vehicle exceeded a predetermined acceleration limit. For example, harsh events may include harsh acceleration events wherein excessive positive longitudinal acceleration of the operator vehicle occurs. The harsh events may also include harsh braking events wherein excessive negative longitudinal acceleration of the operator vehicle occurs. Further, the harsh events may also include harsh cornering events wherein excessive lateral acceleration of the operator vehicle occurs.

Speeding events may represent occasions where the operator vehicle exceeded a predetermined speed limit. The predetermined speed may be based on the legal speed limit of the road segment along which the operator vehicle was travelling. For example, the predetermined speed limit may be 100%, 110%, 120%, etc., of the legal speed limit. The harsh speeding events may include different types of speeding events based on the severity of the speeding. For example, the speeding events may include light speeding events, medium speeding events, and heavy speeding events. Each type of speeding event may have a different predetermined speed limit. For example, a light speeding event may have a predetermined speed limit that is 105% of the legal speed limit, whereas a heavy speeding event may have a predetermined speed limit that is 115% of the legal speed limit. Further, it is noted that the predetermined speed limit may depend on the speed of the operator vehicle. For example, the predetermined speed limit may be a lower percentage at lower legal speed limits as compared to higher legal speed limits.

Seatbelt events may represent occasions where the seatbelt of the operator was not engaged during operation of the operator vehicle.

The safety exception events may be determined from telematics data collected from the operator vehicle or vehicles. For example, a telematics device 130 installed in a vehicle 120 of the operator may collect telematics data (e.g., vehicle data) that may be used to determine whether a safety exception event has occurred. In more detail, for harsh events, the telematics data may include the duration, the time of occurrence, and the magnitude of the acceleration of the operator vehicle. For speeding events, the telematics data may include the duration, the time of occurrence, and the magnitude of the speed of the operator vehicle. For seatbelt events, the telematics data may include the duration and time of occurrence of the seatbelt being engaged and/or disengaged.

As described above, the telematics data may originate from various sources of the operator vehicle and/or telematics device 130. For example, acceleration data that may be used to determine whether a harsh event occurred may originate from an accelerometer of the telematics device or may be derived from location data generated by a GPS receiver of the telematics device 130. Speed data that may be used to determine whether a speeding event occurred may originate from a speed sensor of the operator vehicle or may be derived from location data generated by a GPS receiver of the telematics device 130. Seatbelt data that may be used to determine whether a seatbelt event occurred may originate from a seatbelt sensor of the operator vehicle.

As described herein, the safety scores may be based on a normalized rate of occurrence of a safety exception event performed by the operator vehicle. That is, in some embodiments, the safety scores may be based on normalized rates of occurrence of harsh events, speeding events, seatbelt events, or a combination thereof. Each rate of occurrence may be normalized with respect to distance traveled by the operator vehicle, driving duration, or another operational measure of the operator vehicle.

In more detail, there may be different normalized rates of occurrence of each for different types of safety exception events. For example, there may be harsh event rates, speeding event rates, and/or seatbelt event rates. Harsh event rates may represent the number of harsh events per distance travelled, per driving duration, etc. The harsh even rates may include a harsh acceleration rate, a harsh braking rate, and/or a harsh cornering rate. In some embodiments, the harsh events may include harsh event magnitudes and harsh event rates may include hash event magnitude rates. A harsh event magnitude may represent a normalized sum of harsh event magnitudes. The harsh event magnitude rates may include a harsh acceleration magnitude rate, a harsh breaking magnitude rate, and/or a harsh cornering magnitude rate.

Speeding event rates may represent the number of speeding events per distance traveled, per driving duration, etc. The speeding event rates may be rescaled based on the severity and/or duration of the speeding. The speeding event rates may include different types of speeding event rates based on the different types of speeding events. For example, the speeding event rates may include light speeding event rates, medium speeding event rates, and heavy speeding event rates. In some embodiments, the different types of speeding event rates may be combined to generate an overall speeding rate. The overall speeding rate may be determined based on, for example, a weighted average of the light speeding event rate, medium speeding event rate, and heavy speeding event rate. The different speeding event rates may be assigned different weights depending on the severity of the speeding event. For example, light speeding may be assigned a lower weight than heavy speeding.

Seatbelt event rates may represent the number of seatbelt events per distance traveled, per driving duration, etc.

Once the normalized rate of occurrence of the safety exception event or events is determined, the safety score may be generated therefrom. In some embodiments, the safety score may be based on the normalized rate of occurrence of each safety exception event. In other embodiments, the safety score may comprise a plurality of safety subscores, each safety subscore based on a normalized rate of occurrence of a different safety exception event. For example, a safety score may comprise a harsh event subscore, a speeding subscore, and a seatbelt event subscore. In a further embodiment, one or more of the safety subscores may comprise a plurality of safety subtype scores, each subtype score based on a normalized rate of occurrence of a safety exception event type. For example, a harsh event subscore may comprise a harsh acceleration subtype score, a harsh braking subtype score, and/or a harsh cornering subtype score.

The safety score may be generated from the normalized rate of occurrence of the safety exception event using a variety of techniques. For example, in an embodiment, a plurality of safety subscores may be generated by converting normalized rates of occurrence of different types of safety exception events using one or more statistical transformation functions such that each safety subscore satisfies a predetermined statistical distribution (e.g., a predetermined finite range, a normal or Gaussian distribution having a predetermined mean and standard deviation, or a combination thereof). Examples of suitable statistical transformation functions include, but are not limited to, sigmoid transformation functions and inverse transformation functions. In such embodiments, once the safety subscores are generated, the safety score may be determined using, for example, a weighted average of the safety subscores. In more detail, different safety subscores may be assigned different weights depending on the severity of the safety risk associated with the underlying safety exception event. For example, a speeding event subscore may be assigned a greater weight than a seatbelt event subscore.

Referring back to FIG. 4, at 430 it is shown that the presence of any hazardous zones between a location of each of the operators and a location of each of the one or more service requests may be determined based on the traffic data. As described herein, the traffic data may include map data identifying one or more road networks in one or more geographical areas. As also described herein, the one or more road networks each comprise a plurality of road segments, each road segment corresponding to at least a portion of a roadway (e.g., a road, a highway, a street, etc.). The traffic data may therefore include map data identifying road segments present between a location of an available operator (e.g., determined using the operator data as described herein) and a location of each of the one or more service requests (e.g., determined using the data relating to the one or more service requests as described herein). Thus, in some embodiments, the presence of the one or more hazardous zones may be determined to be along one or more road segments between the location of each of the available operators and the location of each of the one or more service requests.

The presence of the one or more hazardous zones may be determined using a number of techniques. For example, in some embodiments, the determining of whether any hazardous zones are present may comprise identifying, using the traffic data, any road segments between the location of each of the operators and the location of each of the one or more service requests upon which one or more vehicle collision events have occurred. Thus, in such embodiments, the traffic data may include vehicle collision data for the one or more road networks identified by the map data. The vehicle collision data may include information such as the number of vehicle collision events along a road segment of the one or more road networks, the number of vehicles involved in the vehicle collision event, the type of vehicle collision event, the severity of the vehicle collision event, and the like. Vehicle collision data may be obtained from various providers such as, but not limited to, various government agencies. As well, or alternatively, the vehicle collision data may be obtained from the telematics devices 130 installed in the vehicles 120. In more detail, a user managing a vehicle fleet may obtain vehicle collision event information from their vehicle fleet using the telematics devices 130, which may obtain telematics data such as, but not limited to, vehicle speed data, vehicle acceleration data (positive or negative), gyroscopic data (e.g., from sensor 138), location data, and the like during the vehicle collision event that may be used to determine the location of the vehicle collision event as well as estimate the severity thereof.

A vehicle collision event may generally refer to an event wherein a vehicle collides with another vehicle, infrastructure, terrain, etc. Each vehicle collision event may have one or more collision types associated therewith. For example, a collision type may be, but is not limited to, a weather-related collision, a vehicle-vehicle collision, an infrastructure-related collision, a heavy-vehicle collision, or a combination thereof. A vehicle-vehicle collision may generally refer to a vehicle collision event wherein a vehicle collides with another vehicle. A weather-related collision may generally refer to a vehicle collision event wherein a weather event (e.g., snow, rain, fog, an avalanche, etc.) is a factor. An infrastructure-related collision may generally refer to a vehicle collision event wherein infrastructure is a factor (e.g., bridges that have a height lower than regulatory guidelines, poorly maintained roadways, roadways located along terrain that is difficult to navigate, etc.). A heavy-vehicle collision may generally refer vehicle collision events wherein a heavy-vehicle such as a class 8 vehicle or other industrial vehicle is involved. As will be appreciated, each vehicle collision event may be a combination of collision types. For example, a vehicle collision event may be a heavy-vehicle collision, a vehicle-vehicle collision, and a weather-related collision. The collision type or types of the vehicle collision event may be, for example, indicated in the vehicle collision data, assigned by the processor 112, 132, 152 based on the vehicle collision data, etc.

In the systems and methods of the present disclosure, a road segment having had one or more vehicle collision events occur therealong may be identified as a hazardous zone. In some embodiments, a road segment may have had to have had a number of vehicle collision events greater than a predetermined threshold to be identified as a hazardous zone. In such embodiments, the predetermined threshold may be 2, 3, 4, 5, or 6, or a greater number of vehicle collision events. As will be appreciated, such embodiments may be useful, as a road segment that experienced, for example, only a single vehicle collision event may not necessarily be hazardous to operate a vehicle along.

In some cases, adjacent road segments may have had one or more vehicle collisions occur therealong. In such cases, the adjacent road segments may be considered one hazardous zone. It may also be the case that a plurality of hazardous zones are identified within a relatively small geographical area (e.g., a plurality of road segments having had one or more vehicle collisions adjacent to each other or in close proximity to each other). In such cases, it may be useful group the plurality of hazardous zones in the relatively small geographical area as a single hazardous zone. The plurality of hazardous zones may be grouped using any suitable technique. For example, in some embodiments, one or more of the processors 112, 132, 152 may be operable to draw a border around the geographical area within which the plurality of hazardous zones are located, thereby defining a hazardous zone that may be visually represented to a user as a circle or polygon on a map (e.g., from map data of the traffic data). Alternatively, a user may manually draw one or more borders on a map to select a plurality of hazardous zones for grouping together as a single hazardous zone (e.g., using the computing device 150).

In some embodiments, the determining of the presence of any hazardous zones may further comprise operating the at least one processor to determine a severity score associated with each of the one or more vehicle collision events, and assign each road segment having one or more vehicle collision events therealong a hazard score based at least in part on the number of vehicle collision events and the severity score associated with each thereof. A severity score may generally indicate the severity of a corresponding vehicle collision event. In more detail, as described above, the traffic data may include vehicle collision data (e.g., obtained from an information provider such as a government agency, or from a telematics device 130) relating to vehicle collisions that have occurred within one or more road networks. The severity score may be determined based on vehicle collision data such as, but not limited to, a vehicle type involved in each of the vehicle collision events, a time of occurrence of each of the one or more vehicle collision events, weather conditions during each of the one or more vehicle collision events, a measured g-force during each of the one or more vehicle collision events, or a combination thereof.

For example, in some embodiments, the severity score may be based at least in part on the measured g-force during each of the one or more vehicle collision events. In such embodiments, a severity score may be assigned to each vehicle collision event based on one or more predetermined thresholds of measured g-force. For example, a severity score of 0 may be assigned to a vehicle collision event having a measured g-force of less than a first predetermined threshold, a severity score of 1 may be assigned to a vehicle collision event having a measured g-force of greater than the first predetermined threshold but less than a second predetermined threshold, and a severity score of 2 may be assigned to a vehicle collision event having a measured g-force of greater than the second predetermined threshold. As will be appreciated, the measured g-force for the one or more vehicle collision events may be provided by a vehicle collision information provider (e.g., a government agency), obtained from a telematics device 130 installed in one or more of the vehicles involved in the vehicle collision event, etc.

Once the severity score is determined for each of the one or more vehicle collision events that occurred along a road segment, a hazard score may be assigned to that road segment. The hazard score may generally indicate how hazardous a particular road segment is, or, put differently, may represent the risk of an operator vehicle experiencing a vehicle collision event along that particular road segment. The hazard score may be useful for route planning or optimizing when multiple hazardous zones are present between the location of an operator and the location of each of the one or more service requests (e.g., hazardous zones having a hazard score indicating a particularly hazardous area for an operator vehicle to travel may be avoided over those having a hazard score indicating a less-hazardous area).

As described above, the hazard score may be based at least in part on the number of vehicle events that occurred thereon and the severity score associated with each thereof. For example, a hazard score for a road segment having had a plurality of vehicle collisions occur threalong may have a higher hazard score (i.e., indicating that the road segment is relatively hazardous) as compared to a road segment having only a single vehicle collision event occur therealong. As another example, a road segment having fewer vehicle collision events than another road segment may still have a higher hazard score if the vehicle collision events have a higher severity score associated therewith. The vehicle collision events may therefore be weighted differently based on each of their severity scores when assigning the hazard score to the corresponding road segment. As well, in some embodiments, the vehicle collision events may be weighted differently depending on the collision type or types associated with each thereof when assigning the hazard score. For example, a vehicle collision event associated with a weather-related collision type may be weighted less than a vehicle collision event associated with an infrastructure-related collision type.

In some embodiments, the hazard score may be based at least in part on one or more trends in the vehicle collision data, such as, but not limited to, a trend in the number of vehicle collision events that have occurred over a period of time along the road segment. The trend in vehicle collision data may be determined using one or more statistical models (e.g., an exponential moving average). In such embodiments, for two road segments having had the same number of vehicle collision events of identical severity occur therealong, the road segment having a number of vehicle collision events that is trending downwardly (i.e., fewer vehicle collision events over time) may be assigned a hazard score that is lower than the road segment having a number of vehicle collision events that is trending upwardly (i.e., a greater number of vehicle collision events over time).

In some embodiments, the hazard score may be based on a numerical scale. For example, a hazard score of 1 may indicate that a relatively low number of vehicle collision events that each have a relatively low severity score associated therewith have occurred, while a hazard score of 10 may indicate that a relatively high number of vehicle collision events that each have a relatively high severity score associated therewith have occurred. Of course, the hazard score may be based on other scales or rating systems (e.g., an alphabetic scale, a word-based rating system, etc.) if so desired.

As described above, each vehicle collision event may have associated therewith a collision event type. In some embodiments, the hazardous zones may be classified based on the collision event types associated with the vehicle collision events thereof. For example, the collision types may be aggregated (e.g., by way of a majority vote) to determine the most common collision types occurring within the hazardous zones. The hazardous zones may then be classified based on the most commonly occurring collision types. For example, a hazardous zone may be classified as a weather-related collision zone, a heavy-vehicle collision zone, etc. Such classifications may be useful when route planning for operators having particular safety scores, as will be described herein.

Referring back to FIG. 4, at 440 it is shown that a response cost for each of the operators may be determined. The response cost may represent an overall cost associated with selecting a particular operator to respond to a service request. In more detail, the response cost may be based at least in part on an operational cost corresponding to a predicted cost associated with a selected operator travelling to the location of each of the one or more service requests, and a safety cost corresponding to a predicted cost associated with the selected operator traversing one or more identified hazardous zones, and based at least in part on the safety score of the selected operator and one or more parameters of each of the one or more identified hazardous zones.

The operational cost for each operator may be determined based on a number of factors. For example, the operational cost may comprise costs associated with, but not limited to, vehicle operation, vehicle maintenance, operator hourly rates, operator overtime rates, or a combination thereof. Examples of vehicle operation costs include fuel refill costs (e.g., gasoline refills, diesel refills, battery recharges, etc.) tolls incurred along particular roadways, etc. Examples of vehicle maintenance costs include costs associated with regular vehicle maintenance (e.g., oil changes), unscheduled vehicle maintenance (e.g., a vehicle breakdown during operational hours), and other costs associated with maintaining the usability of the vehicle. Operator hourly rates and operator overtime rates, as will be appreciated, may be based on contractual agreements between an operator and their employer and may differ between operators and may be obtained from, for example, the operator data. Thus, the operational cost may differ from user to user, and a user may advantageously determine operational costs for a selected operator based on factors that are relevant to their operation (e.g., freight transport, maintenance services, etc.).

As described above, the safety cost for each operator may be based at least in part on the safety score associated therewith as well as one or more parameters of each identified hazardous zone. Examples of parameters of each identified hazardous zone that may impact the safety cost for each operator include the size of the hazardous zone (e.g., the length of road segment along which one or more vehicle collision events have occurred), a hazard score associated with the hazardous zone, a classification of the hazardous zone (e.g., a weather-related collision zone, a heavy-vehicle collision zone, and the like), etc.

In more detail, as one example, a safety cost may increase if the safety score of the operator indicates that the operator experiences a relatively high normalized rate of occurrence of a safety exception event. As a further example, the safety cost may increase the larger the identified hazardous zone is, as the operator will have to spend a greater amount of time traversing the hazardous zone, which may, in turn, increase the risk of the operator experiencing a vehicle collision event.

In some embodiments, the safety cost associated with each operator may be based at least in part on the safety score of the operator and the hazard score assigned to the one or more identified hazardous zones. In more detail, as described herein, an operator having a relatively low safety score (i.e., indicating that the operator experiences a relatively high normalized rate of occurrence of a safety exception event) may incur a higher safety cost. Similarly, if an identified hazardous zone has a relatively high hazard score (i.e., indicating that an operator vehicle has an increased risk of experiencing a vehicle collision event), the safety cost associated with the operator traversing that hazard zone may also increase. As will be appreciated, the impact of a hazardous zone having a relatively high hazard score on the safety cost may be at least partially offset by the operator having a relatively high safety score (i.e., indicating that the operator experiences a relatively low normalized rate of occurrence of a safety exception event) and vice versa.

In some embodiments, the safety cost associated with each operator may be based at least in part on the safety subscores and/or subtype scores of the operator and the classification of each identified hazardous zone. In more detail, as described herein, safety subscores and safety subtype scores may indicate each indicate a normalized rate of occurrence of particular safety exception events and safety exception event types, respectively. As also described herein, the classification of hazardous zones may be based on the most common collision type occurring therein. As will be appreciated, different classifications of hazardous zones may be more or less prone to vehicle collision events caused by certain safety exception event types. For example, a hazardous zone classified as a weather-related collision zone may be more prone to vehicle collision events influenced by safety exception events such as harsh acceleration, harsh braking, and/or harsh cornering (e.g., due to excessive changes in acceleration on roadways that are slick as a result of rain or ice). Thus, an operator having certain safety subscores and/or safety subtype scores may be better-suited than another operator to traverse certain classifications of hazardous zones, and, as a result, may have a lower safety cost associated therewith.

In some embodiments, the safety cost associated with each operator may be based at least in part on a safety score trend of the operator and one or more parameters of the identified hazard zones. As described above, the safety score associated with the operator represents a normalized rate of occurrence of a safety exception event performed by an operator vehicle (i.e., a vehicle of the operator). As will be appreciated, the number of safety exception events an operator vehicle performs may change over time. As a result, a trend in the number of safety exception events performed may be determined using, for example, one or more statistical functions (e.g., an exponential moving average) that may, in turn, be used when determining safety costs. For example, for two operators having identical safety scores and travelling identical routes (e.g., traversing the same hazardous zones), if the safety score of one of the operators is trending downwardly while the safety score of the other operator is trending upwardly, the safety cost associated with the operator having the upwardly-trending safety score (i.e., indicating that the operator is performing fewer safety exception events over time) may be less than that associated with the operator having the downwardly-trending safety score.

The response cost associated with each of the operators may be determined using any suitable devices and systems, such as those described above in relation to FIG. 1 to FIG. 3. For example, the processor 112 and/or the processor 152 may be used to calculate the response cost based on the operator data, user inputs at the computing device 150, etc. In some embodiments, the response cost may be determined using an economic model that may consider the operational costs, the safety costs, as well as additional costs. The additional costs may include, but are not limited to, social costs such those associated with continuity of customer care, compliance with customer preferences (e.g., operating in a preferred language), sending an operator to a service request located outside of a preferred work area, late arrival times, missed service requests, sustainability (e.g., greenhouse gas emissions, fossil fuels consumed, and the like), etc. For example, if an operator would have relatively low operational and safety costs to respond to a service request but could not arrive within a customer-requested timeframe, it may be beneficial to send another operator that is able to respond to each of the one or more service requests within the requested timeframe, regardless of whether the operational and safety costs would be higher. As will be appreciated, in such embodiments, the particular additional costs considered may be selected by a user based on their particular use case.

Referring back to FIG. 4, it is shown at 450 that a route to the location of each of the one or more service requests may be generated based on the response cost associated with each of the operators. Each route may be generated using any suitable devices and/or systems, such as those described above in relation to FIG. 1 to FIG. 3. For example, the processor 112 and/or the processor 152 may generate a route along one or more road segments using the traffic data, taking into account the response cost of each available operator.

As described above, the route to the location of each of the one or more service requests may be based on the response cost associated with each of the operators. In more detail, the generation of the route to the location of each of the one or more service requests may be based on the response cost as a whole (e.g., the combination of operational costs, safety costs, and any additional costs) or on the factors of the response cost (e.g., the operational costs and safety costs considered separately). The generation of the route to the location of each of the one or more service requests may therefore advantageously be tailored to the specific needs of each user of the systems and methods of the present disclosure.

For example, in some embodiments, the generating of the route to the location of each of the one or more service requests may comprise selecting an operator having a selected response cost associated therewith and generating a route between the operation having the selected response cost associated therewith and the location of each of the one or more service requests. In such embodiments, the selected response cost may be a response cost that is less than a predetermined threshold, a response cost that is lower than the response cost of each other operator, or a combination thereof. As will be appreciated, in embodiments where the selected response cost is a response cost that is less than a predetermined threshold, multiple operators may have response costs associated wherewith that are less than the predetermined threshold. In such cases, a route may be generated for each of the operators, and a user may select (e.g., using the computer device 150) one of the generated routes based on additional factors (e.g., operator workload, additional received service requests, etc.), the safety score of each operator, etc.

In another embodiment, the generating of the route to the location of each of the one or more service requests may comprise generating an initial route between a location of an operator having a selected operational cost associated therewith and the location of each of the one or more service requests and optimizing the initial route based on the safety cost associated with the operator. The selected operational cost may be, for example, an operational cost that is less than a predetermined threshold, an operational cost that is lower than the operational cost associated with each other operator, or a combination thereof. Once generated, the initial route may be optimized based on the safety cost associated with the operator having associated therewith the selected operational cost. For example, in an embodiment, optimizing of the route may comprise adjusting the route to avoid one or more hazardous zones to lower the safety cost associated with the operator.

As will be appreciated, in some cases, it may not be possible to avoid hazardous zones entirely when optimizing the initial route. In such cases, it may be useful to rank the hazardous zones based on one or more parameters associated therewith. For example, the optimizing of the initial route may comprise ranking any hazardous zones based on the hazard score associated with each thereof and adjusting the initial route based on the ranking of the hazardous zones. In more detail, a user may adjust the initial route (e.g., using the computing device 150) to avoid hazardous zones having a relative high hazard score associated therewith (i.e., indicating a greater risk of an operator experiencing a vehicle collision event).

Further, in embodiments where the initial route is generated based on a selected operational cost that is less than a predetermined threshold, multiple operators may have operational costs associated wherewith that are less than the predetermined threshold. In such cases, multiple routes may be generated and a user may optimize the route for each operator to determine a route that best suits their needs (e.g., lowest response cost, balance between operational and safety costs, etc.).

In view of the above, the systems and methods of the present disclosure may advantageously allow a user to plan or optimize a route that takes into account both predicted operational costs associated with responding to a service request and potential safety costs associated with a particular operator or operators responding to each of the one or more service requests. Thus, when route planning and optimizing, not only may operational costs be minimized, but operator safety may be maximized and any costs resulting from vehicle collision events may be minimized and/or avoided altogether.

In the present disclosure, all terms referred to in singular form are meant to encompass plural forms of the same. Likewise, all terms referred to in plural form are meant to encompass singular forms of the same. Unless defined otherwise, all technical and scientific terms used herein have the same meaning as commonly understood by one of ordinary skill in the art to which this disclosure pertains.

As used herein, the term "about" refers to an approximately +/-10 % variation from a given value. It is to be understood that such a variation is always included in any given value provided herein, whether or not it is specifically referred to.

It should be understood that the compositions and methods are described in terms of "comprising," "containing," or "including" various components or steps, the compositions and methods can also "consist essentially of or "consist of the various components and steps. Moreover, the indefinite articles "a" or "an," as used in the claims, are defined herein to mean one or more than one of the element that it introduces.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, whenever a numerical range with a lower limit and an upper limit is disclosed, any number and any included range falling within the range are specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values even if not explicitly recited. Thus, every point or individual value may serve as its own lower or upper limit combined with any other point or individual value or any other lower or upper limit, to recite a range not explicitly recited.

The Drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Although individual embodiments are dis-cussed, the disclosure covers all combinations of all those embodiments. Furthermore, no limitations are intended to the details of construction or design herein shown, other than as described in the claims below. Also, the terms in the claims have their plain, ordinary meaning unless otherwise explicitly and clearly defined by the patentee. It is therefore evident that the particular illustrative embodiments disclosed above may be altered or modified and all such variations are considered within the scope and spirit of the present disclosure. If there is any conflict in the usages of a word or term in this specification and one or more patent(s) or other documents that may be incorporated herein by reference, the definitions that are consistent with this specification should be adopted.

Many obvious variations of the embodiments set out herein will suggest themselves to those skilled in the art in light of the present disclosure. Such obvious variations are within the full intended scope of the appended claims.

## Claims

1. A system for route planning, the system comprising:
at least one data storage operable to store operator data, traffic data, and data relating to one or more service requests;
at least one processor in communication with the at least one data storage, the at least one processor operable to:
identify, using the operator data, a plurality of operators available to respond to each of the one or more service requests, each of the operators having a safety score associated therewith;
determine whether any hazardous zones are present between a location of each of the operators and a location of each of the one or more the service requests based on the traffic data;
determine, for each of the operators, a response cost based at least in part on:
an operational cost corresponding to a predicted cost associated with a selected operator travelling to the location of each of the one or more service requests; and
a safety cost corresponding to a predicted cost associated with the selected operator traversing one or more identified hazardous zones, and based at least in part on the safety score of the selected operator and one or more parameters of each of the one or more identified hazardous zones; and
generate a route to the location of each of the one or more service requests based on the response cost associated with each of the operators.

2. The system of claim 1, wherein the at least one processor is operable to determine of whether any hazardous zones are present by identifying, using the traffic data, any road segments between the location of each of the operators and the location of each of the one or more service requests upon which one or more vehicle collision events have occurred.

3. The system of claim 2, wherein the at least one processor is further operable to:
determine a severity score associated with each of the one or more vehicle collision events; and
assign each identified road segment a hazard score based on the number vehicle collision events having occurred thereon and the severity score associated with each thereof.

4. The system of any one of claims 1 to 3, wherein the safety cost is based at least in part on the safety score of the selected operator, a safety score trend associated with the selected operator, or a combination thereof, and a classification of each of the one or more identified hazardous zones, a hazard score of each of the one or more hazardous zones, or a combination thereof.

5. The system of any one of claims 1 to 4, wherein the at least one processor is operable to generate the route to the location of each of the one or more service requests based on the response cost associated with each of the operators by:
generating an initial route between a location of an operator having a selected operational cost associated therewith and the location of each of the one or more service requests; and
optimizing the initial route based on the safety cost associated with the operator.

6. The system of claim 5, wherein the at least one processor is operable to optimize the initial route by adjusting the initial route to avoid one or more identified hazardous zones.

7. The system of claim 5 or 6, wherein the at least one processor is operable to optimize the initial route by:
ranking any identified hazardous zones based on a hazard score associated with each thereof; and
adjusting the initial route based on the hazard score associated with each identified hazardous zone.

8. A method for route planning, the method comprising operating at least one processor to:
receive operator data, traffic data, and data relating to one or more service requests;
identify, using the operator data, a plurality of operators available to respond to each of the one or more service requests, each of the operators having a safety score associated therewith;
determine whether any hazardous zones are present between a location of each of the operators and a location of each of the one or more the service requests based on the traffic data;
determine, for each of the operators, a response cost based at least in part on:
an operational cost corresponding to a predicted cost associated with a selected operator travelling to the location of each of the one or more service requests; and
a safety cost corresponding to a predicted cost associated with the selected operator traversing one or more identified hazardous zones, and based at least in part on the safety score of the selected operator and one or more parameters of each of the one or more identified hazardous zones; and
generate a route to the location of each of the one or more service requests based on the response cost associated with each of the operators.

9. The method of claim 8, wherein the determining of whether any hazardous zones are present comprises operating the at least one processor to identify, using the traffic data, any road segments between the location of each of the operators and the location of each of the one or more service requests upon which one or more vehicle collision events have occurred.

10. The method of claim 9, further comprising operating the at least one processor to:
determine a severity score associated with each of the one or more vehicle collision events; and
assign each identified road segment a hazard score based on the number vehicle collision events having occurred thereon and the severity score associated with each thereof.

11. The method of any one of claims 8 to 10, wherein the safety cost is based at least in part on the safety score of the selected operator, a safety score trend associated with the selected operator, or a combination thereof, and a classification of each of the one or more identified hazardous zones, a hazard score of each of the one or more hazardous zones, or a combination thereof.

12. The method of any one of claims 8 to 11, wherein the generating of the route to the location of each of the one or more service requests based on the response cost associated with each of the operators comprises operating the at least one processor to:
generate an initial route between a location of an operator having a selected operational cost associated therewith and the location of each of the one or more service requests; and
optimize the initial route based on the safety cost associated with the operator.

13. The method of claim 12, wherein the optimizing of the initial route comprises operating the at least one processor to adjust the initial route to avoid one or more identified hazardous zones.

14. The method of claim 12 or 13, wherein the optimizing of the initial route comprises operating the at least one processor to:
rank any identified hazardous zones based on a hazard score associated with each thereof; and
adjust the initial route based on the hazard score associated with each identified hazardous zone.

15. A non-transitory computer readable medium having instructions stored thereon executable by at least one processor to implement a method for route planning, the method comprising operating the at least one processor to:
receive operator data, traffic data, and data relating to one or more service requests;
identify, using the operator data, a plurality of operators available to respond to each of the one or more service requests, each of the operators having a safety score associated therewith;
determine whether any hazardous zones are present between a location of each of the operators and a location of each of the one or more the service requests based on the traffic data;
determine, for each of the operators, a response cost based at least in part on:
an operational cost corresponding to a predicted cost associated with a selected operator travelling to the location of each of the one or more service requests; and
a safety cost corresponding to a predicted cost associated with the selected operator traversing one or more identified hazardous zones, and based at least in part on the safety score of the selected operator and one or more parameters of each of the one or more identified hazardous zones; and
generate a route to the location of each of the one or more service requests based on the response cost associated with each of the operators.
